# FASCICULE DE BREVET EUROPEEN

(11) **EP 3 662 534 B1**
(45) Date de publication et mention de la délivrance du brevet: **19.10.2022**
(21) Numéro de dépôt: 18752577.9
(22) Date de dépôt: 10.07.2018
(51) Int. Cl.: H01Q 9/04, H01Q 9/06, G06K 7/00, G01R 31/302, H01Q 1/22

(54) **ANTENNE À PLAQUE POUR COUPLER UN TERMINAL D'ÉMISSION-RÉCEPTION À UN DISPOSITIF RFID**
PATCH-ANTENNE ZUR KOPPLUNG EINES SENDE-/EMPFANGSENDGERÄTES AN EINE RFID-VORRICHTUNG
PATCH ANTENNA FOR COUPLING A TRANSMITTING/RECEIVING TERMINAL TO AN RFID DEVICE

(30) Priorité: 01.08.2017 FR 1757364
(43) Date de publication de la demande: 10.06.2020
(73) Titulaire: PRIMO1D, 38040 Grenoble Cedex 9 (FR)
(72) Inventeur: ANDIA VERA, Gianfranco, 13013, Chateau Gombert Marseille (FR)
(74) Mandataire: IP Trust
(86) Numéro de dépôt international: PCT/FR2018/051731
(87) Numéro de publication internationale: WO 2019/025683

(56) Documents cités:
- EP-A1- 1 209 759
- EP-A1- 1 826 866
- EP-A1- 2 251 934
- US-A1- 2002 167 450
- US-A1- 2015 339 567
- US-B2- 8 339 213

## Description

### DOMAINE DE L'INVENTION

La présente invention concerne le test de transpondeurs de radio identification, par exemple un test de fin de ligne de production de ces transpondeurs. Elle trouve une application particulière lorsqu'une pluralité de transpondeurs devant être testés sont disposés à proximité les uns des autres, sur un ruban, ou enchainés les uns aux autres par l'intermédiaire d'éléments filaires.

### ARRIERE PLAN TECHNOLOGIQUE DE L'INVENTION

Un transporteur de radio identification, également désigné par l'expression dispositif RFID (acronyme du terme anglo-saxon « RadioFrequency Identification »), est usuellement constitué d'une puce d'émission-réception couplée à une antenne. L'antenne peut être formée par des pistes métalliques disposées sur une étiquette, la puce d'émission-réception étant assemblée à l'étiquette pour mettre en contact ses plots de connexion aux pistes constituant l'antenne. Alternativement, l'antenne peut être formée d'éléments filaires conducteurs, ceux-ci étant assemblés et reliés électriquement aux plots de connexion de la puce par encastrement dans des rainures aménagés sur les parois latérales de la puce. Une telle configuration est par exemple connue du document US8471773, et cette technologie de connexion désignée par l'appellation commerciale E-THREAD^{™}.

Pour minimiser les coûts de fabrication, les dispositifs RFID sont fabriqués collectivement. Une pluralité de dispositifs RFID sont dans ce cas disposés à proximité les uns des autres, par exemple sur un ruban dont on pourra découper des portions pour former des étiquettes. Le document US 8471773 précité prévoit de former une chaîne de puces d'émission réception, les puces étant reliées les unes aux autres par l'intermédiaire d'éléments filaires de grande dimension. En distançant les puces d'une distance équivalente à environ la moitié de la longueur d'onde de fonctionnement de la puce d'émission-réception, on s'assure que, après découpe, les portions d'éléments filaires puissent former une antenne dipolaire fonctionnelle.

Quels que soient les technologies mises en œuvre pour former des dispositifs RFID, ceux-ci doivent être testés à l'issue de leurs fabrications, pour s'assurer de leur fonctionnement conforme.

Le document WO 2013 14441 rappelle qu'un dispositif RFID peut être conçu pour fonctionner en champ lointain, et dans ce cas la communication entre ce dispositif et un terminal d'émissionréception met en œuvre un champ électromagnétique rayonné. Un dispositif RFID peut également être conçu pour fonctionner en champ proche, et dans ce cas la communication se fait par couplage réactif, capacitif ou inductif.

Dans le cas d'un dispositif RFID en champ lointain, le document WO20131441 rappelle également que le test fonctionnel de fin de ligne est problématique car il est difficile de focaliser le champ électromagnétique émis par l'équipement de test sur un unique dispositif lorsqu'une pluralité de dispositifs sont disposés à proximité les uns des autres. Dans ce cas en effet, le signal de retour reçu par l'équipement de test ne correspond pas uniquement à la réponse fournie par le dispositif RFID que l'on souhaite tester, et il peut incorporer la réponse fournie par des dispositifs adjacents.

Ce problème est encore plus marqué dans le cas où on souhaite tester en fin de ligne un dispositif RFID mettant en œuvre la technologie E-THREAD. En effet, outre le problème de la focalisation du champ électromagnétique émis par l'équipement de test, la conduction électrique pouvant se produire dans les éléments filaires peut avoir pour conséquence d'activer un dispositif RFID adjacent à celui sous test, même si ce dernier n'est pas directement soumis aux champs électromagnétiques, c'est à dire s'il est disposé en dehors de la zone d'émission de l'équipement de test.

Le document WO2017021264 vise à traiter ce problème en confinant le rayonnement émis par le testeur dans un boîtier où seul un dispositif RFID sous test est placé. Dans un mode de mise en œuvre, ce document propose également de contacter les éléments filaires constituant l'antenne du dispositif RFID de manière à former un court-circuit et à isoler le dispositif sous test des autres dispositifs de la chaîne, et notamment ceux qui lui sont directement adjacents.

Ce mode de mise en œuvre nécessite donc de former un contact physique avec les éléments filaires, ce qui n'est pas toujours compatible avec une exploitation industrielle nécessitant de très fortes cadences de production.

La présente invention vise donc à traiter au moins partiellement ce problème. Elle s'applique notamment au test de dispositifs RFID lorsque ceux-ci sont arrangés sous la forme d'une chaîne ou d'un ruban de puces d'émission-réception, sans nécessiter la mise en contact physique d'un organe de l'équipement de test avec la chaine ou le ruban de puces d'émission-réception.

### BREVE DESCRIPTION DE L'INVENTION

En vue de la réalisation de l'un de ces buts, l'objet de l'invention propose un équipement de test selon la revendication 1.

L'équipement de test ainsi configuré permet d'isoler électriquement un dispositif RFID à tester d'une chaîne de dispositifs RFID qui lui sont adjacents en vue de la soumettre au test.

Selon d'autres caractéristiques avantageuses et non limitatives de l'invention, prises seules ou selon toute combinaison techniquement réalisable :
- les premier et second circuits d'ajustement d'impédance comprennent chacun une ligne de transmission quart d'onde ;
- la ligne de transmission résonante est réalisée sous la forme d'une ligne micro ruban ;
- la ligne principale s'étend d'un bord à l'autre du substrat diélectrique ;
- le premier et le second circuit d'adaptation d'impédance sont disposés latéralement à la ligne principale ;
- le coupleur comprend une cavité résonnante.

### BREVE DESCRIPTION DES DESSINS

D'autres caractéristiques et avantages de l'invention ressortiront de la description détaillée de l'invention qui va suivre en référence aux figures annexées sur lesquels :
- Les figures la à 1d représente différentes vues de dispositifs RFID réalisés à l'aide de la technologie E-THREAD;
- la figure 2 représente un dispositif de test selon un mode de mise en œuvre de l'invention;
- la figure 3 représente une onde stationnaire se développant dans une ligne de transmission de l'antenne à plaque conforme à l'invention.
- La figure 4 représente un mode de réalisation d'une antenne à plaque conforme à l'invention.
- La figure 5 représente un autre mode de réalisation d'une antenne à plaque conforme à l'invention.

### DESCRIPTION DETAILLEE DE L'INVENTION

Par souci de simplification de la description à venir, les mêmes références sont utilisées pour des éléments identiques ou assurant la même fonction dans l'état de la technique ou dans les différents modes de mise en œuvre de la présente description.

On désignera par « dispositif RFID » dans le cadre de la présente demande, tout dispositif comprenant au moins une puce d'émission-réception associée à une antenne.

En préambule, et dans le souci de fournir une description complète, on a représenté sur les figures la à 1d différentes vues d'un dispositif RFID et d'une chaîne de tels dispositifs réalisés par l'intermédiaire de la technologie E-THREAD. Toutefois l'invention n'est nullement limitée à ce type de technologie et elle peut trouver des applications pour le test d'un dispositif radiofréquence de toute constitution.

La technologie de connexion E-THREAD^{™} est par exemple décrite dans les documents US83617, US8723312, US2015318409, US8782880, US8814054 ou US2015230336.

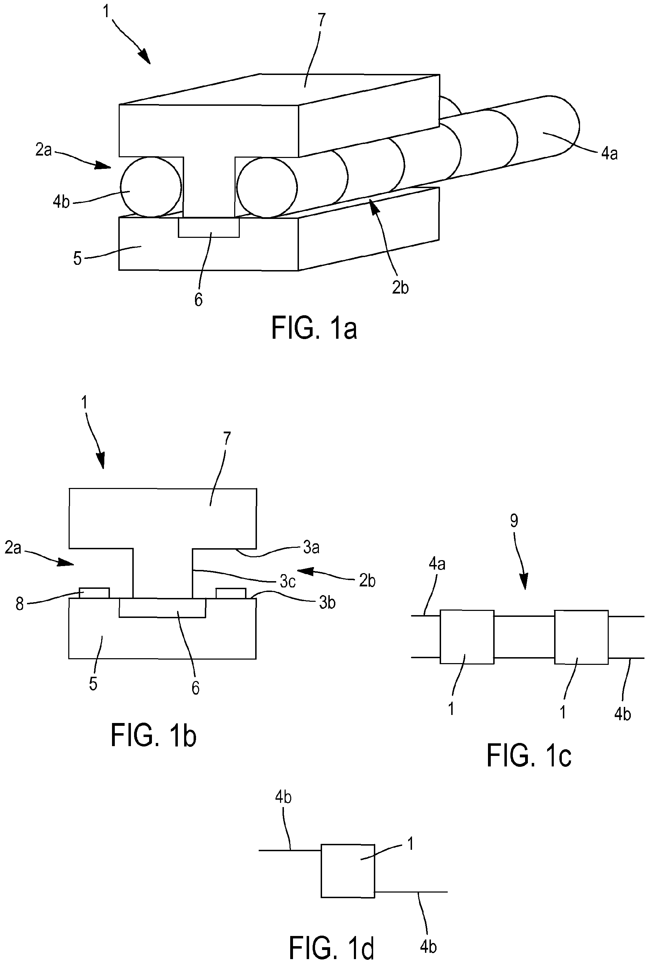

La figure la représente ainsi une vue en perspective d'un composant électronique ou d'une puce 1 compatible avec la technologie de connexion E-THREAD^{™}. Sur cette figure la, la puce 1 est assemblée à deux éléments filaires conducteurs 4a, 4b (et parfois désignés plus simplement « éléments filaires » dans la suite de cette description). La figure 1b représente quant à elle une vue en coupe de la puce 1, sans les éléments filaires 4a, 4b.

La puce 1 comporte deux rainures longitudinales 2a, 2b, chacune de ces rainures étant définie par trois parois 3a, 3b, 3c des éléments constituant la puce 1, sur l'exemple représenté. Chaque rainure 2a, 2b est prévue pour loger un segment d'un élément filaire 4a, 4b. Chaque élément filaire 4a, 4b présente un axe principal, parallèle à l'axe de la rainure longitudinale 2a, 2b dans lequel il est logé.

Chaque élément filaire 4a, 4b peut-être mécaniquement encastré dans une des rainures longitudinales 2a, 2b et/ou maintenu par un adhésif, par soudure ou par tout autre moyen dans cette rainure. Dans tous les cas, les éléments filaires 4a, 4b et la puce sont assemblés l'un à l'autre de manière solidaire.

Comme cela est représenté sur les figures la et 1b, la puce 1 peut comprendre un substrat 5 sur et dans lequel peut être formé un circuit fonctionnel 6 comprenant une puce d'émission-réception telle qu'une puce RFID en champ lointain. Une au moins des parois 3a, 3b, 3c de chaque rainure longitudinale 2a, 2b peut être munie d'un plot 8 ou d'une pluralité de tels plots. Lorsque les éléments filaires 4a, 4b sont logés dans leurs rainures 2a, 2b, ils sont en contact avec le ou les plots 8 positionnés dans cette rainure. Ces plots 8 peuvent contribuer à l'encastrement de l'élément filaire dans la rainure. Certains de ces plots 8 peuvent être électriquement reliés à des bornes du circuit fonctionnel 6, et donc former des plots de connexion, par exemple par l'intermédiaire de pistes conductrices formées sur ou dans le substrat 5.

Lorsqu'il y a lieu de former un contact électrique entre un élément filaire 4a, 4b et un plot de connexion 8, il peut être nécessaire de préalablement dénuder l'élément filaire conducteur 4a, 4b, si celui-ci est muni d'une gaine isolante. Alternativement ou en complément, le plot de connexion 8 peut avoir une forme de lame tranchante qui perce la gaine lors de l'insertion du fil afin d'établir le contact électrique.

Poursuivant la description des figures la et 1b, la puce 1 peut également comprendre un capot 7, par exemple présentant une section en forme de T comme cela est représenté sur la figure 1b, assemblé avec une face du substrat 5. L'assemblage du capot 7 en forme de T et du substrat 5 permet de constituer les rainures longitudinales 2a, 2b. Le capot 7 peut également être muni d'un circuit fonctionnel, de plots et de pistes conductrices reliées électriquement au circuit fonctionnel 6 du substrat 5 ou au circuit fonctionnel du capot 7 dans le cas où un tel circuit est présent.

D'autres modes de réalisation de la puce 1 que celui représenté sur les figures la et 1b sont possibles. Par exemple, la puce 1 peut être formée d'un support plan comportant le circuit fonctionnel, les rainures longitudinales étant formées, par exemple par gravure, sur deux faces latérales opposées de ce support, ou sur l'une et/ou l'autre des faces principales de ce support.

Selon un autre mode de réalisation, la puce 1 peut être formée de deux supports plans de dimensions identiques ou similaires, comportant l'un et/ou l'autre un circuit fonctionnel. Les supports plans sont assemblés chacun aux deux faces opposées d'une entretoise de plus petite dimension, pour définir les deux rainures longitudinales 2a, 2b de la puce 1.

Quel que soit le mode de réalisation choisi, une puce 1 compatible avec la technologie E-THREAD présente un circuit fonctionnel 6, deux rainures longitudinales de connexion 2a, 2b aptes à loger et maintenir chacune un segment d'un élément filaire conducteur 4a, 4b. Dans le cas où l'on souhaite former un dispositif RFID, les éléments filaires conducteurs 4a, 4b sont en contact électrique avec le circuit fonctionnel 6 RFID, et constituent l'antenne permettant à ce circuit fonctionnel de recevoir et transmettre des informations, telles que des informations d'identification. On a représenté sur la figure 1d un tel dispositif RFID.

L'insertion des éléments filaires conducteurs 4a, 4b dans les rainures longitudinales 2a, 2b d'une puce 1 peut être automatisée, par exemple à l'aide d'un équipement d'insertion tel que celui décrit dans le document US8782880.

Des éléments filaires de grandes dimensions peuvent être fournis dans l'équipement sous la forme de bobines ; et les puces 1, similaires à celle qui vient d'être présentée, stockées dans un réservoir de l'équipement. Les éléments filaires de grande dimension sont dévidés des bobines pour être amenés, parallèles l'un à l'autre, au niveau d'une zone de pincement de l'équipement. Celui-ci est également configuré pour amener successivement des puces 1 issues du réservoir au niveau de cette zone de pincement et pour engager un segment de chaque élément filaire de grande dimension dans l'une et l'autre des rainures longitudinales 2a, 2b. On forme de la sorte une chaîne 9 composée d'une pluralité de puces 1 reliées par les éléments filaires de grandes dimensions, comme cela est représenté sur la figure le. L'équipement peut être muni d'une pluralité de réservoirs pour y stocker des puces de natures différentes et former une chaîne de puces composites selon une alternance qui peut être choisie. La chaîne 9 de puces peut être enroulée sur un support pour former une bobine, en vue de son stockage et son transport. Des dispositifs RFID, c'est-à-dire des tronçons de cette chaîne, peuvent être prélevés de la bobine, en découpant les éléments filaires 4a, 4b suivant un motif désiré de découpe, comme cela est décrit dans le document US8471773 précité.

Un dispositif RFID fabriqué de la sorte peut comporter d'autres caractéristiques. On peut ainsi prévoir de mettre en contact les deux éléments filaires 4a, 4b de manière à constituer une boucle, cette boucle pouvant permettre d'ajuster l'impédance de l'antenne dipôle 4a, 4b à celle de la puce 1.

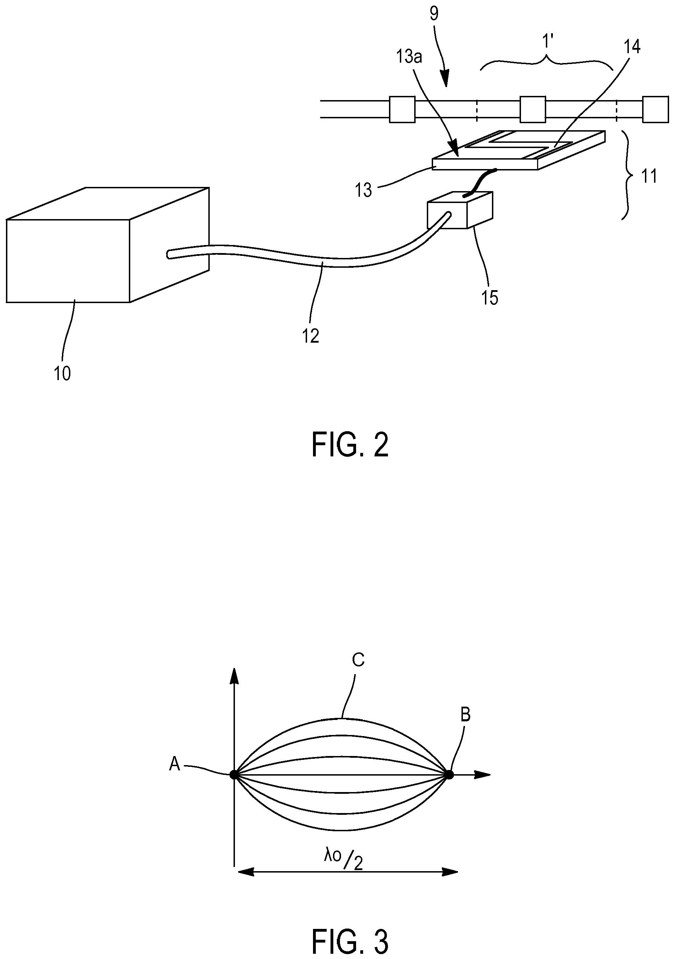

La ligne de fabrication peut être complétée par d'autres équipements que celui d'insertion. Ces équipements peuvent être disposés à proximité des deux éléments filaires, ceux-ci étant maintenus parallèles l'un à l'autre. Selon la nature des traitements que ces équipements mettent en œuvre, ils peuvent être disposés en amont ou en aval de l'équipement d'insertion, en visà-vis de la chaîne 9 de dispositifs. On a ainsi représenté schématiquement figure 2 une portion de cette ligne de fabrication, en aval de l'équipement d'insertion, correspondant à la phase de test fonctionnel des dispositifs RFID qui compose la chaîne 9.

Plus spécifiquement, la figure 2 représente un équipement de test comprenant un terminal d'émission-réception 10 électriquement relié à une antenne à plaques 11 par l'intermédiaire d'un câble de connexion 12, par exemple un câble coaxial. L'antenne 11 est positionnée à proximité de la chaîne 9 de dispositifs RFID, de sorte qu'un dispositif à tester (le dispositif sous test 1') de la chaîne 9 soit disposé dans la zone d'émission de l'antenne. L'antenne à plaque 11 permet donc d'associer le terminal d'émission réception 10 au dispositif RFID (1').

La chaîne de dispositifs RFID 9 est disposée dans un plan parallèle au plan défini par l'antenne à plaque 11, de manière à pouvoir positionner un dispositif RFID dans une position de tests au-dessus de l'antenne 11 et à une distance proche de celle-ci, par exemple comprise entre quelques millimètres et quelques centimètres. Avantageusement, l'antenne ne contacte pas le dispositif RFID 1' ou la chaîne 9, ni au cours du test, ni lors du positionnement d'un dispositif RFID de la chaîne 9 au-dessus l'antenne.

Comme cela est bien connu en soi, l'équipement de test met en œuvre une séquence de test permettant de vérifier que le dispositif RFID sous test 1' est bien fonctionnel. Il peut également configurer ce dispositif, c'est-à-dire procéder à l'enregistrement, dans une mémoire comprise dans la puce d'émission réception 1, d'informations ou d'instructions.

À titre d'exemple, l'équipement de test peut être configuré pour générer un signal électrique présentant une fréquence correspondant à la fréquence de fonctionnement du dispositif RFID 1'. On rappelle que cette fréquence de fonctionnement est normalisée. Elle peut correspondre, pour une transmission en champ lointain, à une fréquence de l'ordre de 900 MHz ce qui correspond à une longueur d'onde de fonctionnement de l'ordre de 33 cm.

Ce signal est transmis par l'intermédiaire du câble de connexion 12 à l'antenne 11 qui émet une onde électromagnétique dans une zone d'émission, ce signal présentant la même fréquence de fonctionnement que celui généré par le dispositif de test. Un dispositif RFID sous test 1' disposé dans cette zone capte le signal. Le dispositif RFID est apte à émettre (dynamiquement ou par rétro-propagation du signal reçu) un signal de retour présentant la fréquence de fonctionnement modulée en amplitude et/ou en phase par l'information enregistrée et mémorisée dans la puce RFID, par exemple un identifiant de cette puce.

Le signal de retour émis par le dispositif RFID est capté par l'antenne 11 et communiqué au terminal 10. Le signal reçu est démodulé en bande de base, et l'information transmise par le dispositif sous test 1', par exemple son identifiant, récupéré. On s'assure de la sorte du bon fonctionnement du dispositif RFID sous test 1'.

Pour pouvoir mettre en œuvre le test avec une cadence suffisante, l'équipement de test peut comprendre une pluralité de stations, chaque station comprenant une antenne à plaque 11 à proximité de laquelle un dispositif sous test 1' peut-être séquentiellement placé. Chaque station peut réaliser une opération élémentaire du test, telle qu'une écriture ou une lecture dans une mémoire du dispositif sous test qui lui est adjacent.

Comme cela a été présenté en introduction, il est important lors de la cette phase de test de pouvoir solliciter séquentiellement un unique dispositif RFID afin de s'assurer de la fiabilité du test. Cette faculté est particulièrement difficile à obtenir lorsqu'une pluralité de dispositifs RFID sont électriquement reliés les uns aux autres par l'intermédiaire de leurs antennes comme c'est le cas dans une chaîne formée à l'aide de la technologie E-THREAD.

On propose de configurer l'antenne 11 pour solliciter un unique dispositif et le coupler électriquement au terminal 10, en d'autres termes d'isoler électriquement un dispositif RFID à tester de la chaîne 9 des dispositifs RFID qui lui sont adjacents en vue de le soumettre au test.

À cet effet, l'antenne 11 est configurée sous la forme d'une antenne à plaque. Elle comprend un substrat diélectrique plan 13. Il peut s'agir, par exemple et sans limiter aucunement l'invention, d'un substrat de résine époxy, présentant une épaisseur de l'ordre du millimètre ou moins, et de forme rectangulaire ou carré. De manière avantageuse, et à titre d'exemple uniquement, ce substrat peut présenter une constante diélectrique supérieure à 20 et une tangentes de perte Delta inférieur à 10^-4.

Quelle que soit la forme et la nature du substrat 13, celui-ci présente une de ses dimensions au moins égales à une demie longueur d'onde de fonctionnement du dispositif RFID à tester.

Le substrat 13 présente sur une première face 13a une ligne de transmission résonnante 14. La ligne de transmission résonnante 14 est reliée au terminal 10 par l'intermédiaire d'un coupleur 15. Celui-ci a pour fonction d'injecter le signal électrique, reçu du terminal 10 par le câble de connexion 12, dans la ligne de transmission résonnante 14.

La ligne de transmission 14 est conçue pour que le signal qui s'y propage soit essentiellement stationnaire à la fréquence de fonctionnement. Ce signal présente deux nœuds de tension A, B distants d'une demie longueur d'onde de fonctionnement, comme cela est représenté sur la figure 3, et un ventre de tension C entre les deux nœuds.

En plaçant le dispositif RFID à tester 1' au-dessus de la ligne de transmission 14 entre les deux nœuds de tension A, B on impose, dans les éléments filaires disposés au droit de ces nœuds de tension, une tension nulle isolant donc électriquement la puce RFID à tester des autres puces qui lui sont adjacentes dans la chaîne.

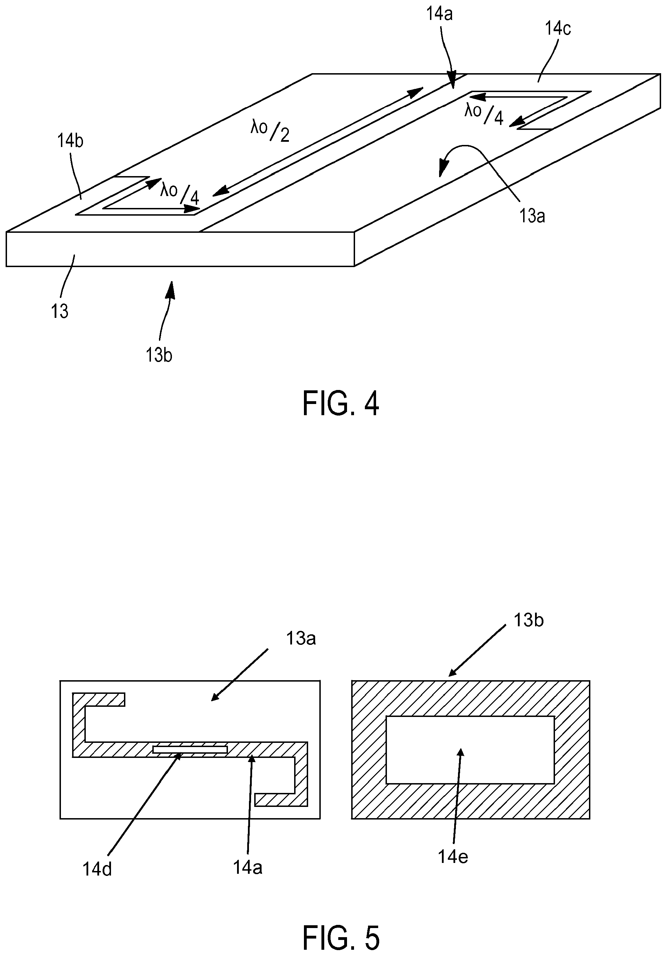

La figure 4 est une vue de dessus schématique de l'antenne à plaques 11. La ligne de transmission 14 comprend une ligne principale rectiligne 14a présentant une longueur de demi-onde, c'est-à-dire présentant une longueur entre sa première extrémité et sa seconde extrémité correspondant à une demi-longueur d'onde de fonctionnement.

La ligne principale 14 peut être formée sous la forme d'une ligne micro ruban. Dans ce cas, la première face 13a du substrat diélectrique est munie d'une piste métallique présentant la longueur désirée de demi-onde, et la face opposée 13b est muni d'un film métallique formant un plan de masse. Comme cela est bien connu en soi, on peut choisir la largeur de la ligne micro ruban (et selon l'épaisseur du substrat et ses caractéristiques diélectriques) pour donner à cette ligne une impédance caractéristique déterminée.

La ligne principale 14a peut-être également formée selon d'autres techniques, par exemple par l'intermédiaire de lignes coplanaires ou de lignes à fentes.

En l'absence de tout autre élément, les extrémités de la ligne principale 14a forment des circuits ouverts, et un signal présentant la fréquence de fonctionnement injecté dans cette ligne conduirait à y former une onde stationnaire présentant deux ventres de tension au niveau des extrémités, ce qui correspond au résultat inverse à celui recherché. Pour contrer cela, une ligne de transmission conforme à l'invention comprend respectivement, reliés électriquement à chacune des extrémités de la ligne principale 14a, un premier et un second circuit d'ajustement d'impédance 14b, 14c conduisant à imposer un nœud de tension à chacune des extrémités de la ligne principale, lorsqu'un signal se propage dans la ligne de transmission. Avantageusement, ces premier et second circuits 14b, 14c sont adaptés en impédance à la celle de la ligne de transmission principale 14a de manière à ce qu'une onde stationnaire puisse se développer dans la ligne de transmission.

Comme cela est représenté sur la figure 4, le premier et le second circuit 14b, 14c peuvent correspondre chacun à une ligne de transmission quart d'onde, électriquement reliée à chacune des extrémités de la ligne principale 14a. L'autre extrémité des lignes de transmission formant le premier le second circuit 14b, 14c constituent des circuits ouverts.

Lorsqu'un signal électrique à la fréquence de fonctionnement est injecté dans une ligne de transmission 14 ainsi configurée, les extrémités en circuit ouvert des lignes en quart d'onde 14b, 14c imposent des ventres de tension en ces extrémités. Elles imposent également un nœud de tension au niveau des extrémités de la ligne principale 14a. Les lignes de transmission en quart d'onde 14b, 14c des premier et second circuits peuvent être formées de micro ruban similairement à celui constituant la ligne de transmission principale 14a. Mais il peut également s'agir d'autres technologies, notamment pour correspondre à celle qui est utilisée pour former la ligne principale.

Pour rendre l'antenne 11 plus compacte, et confiner le couplage électrique entre les deux extrémités de la ligne principale 14a, la ligne principale peut s'étendre d'un bord à l'autre du substrat diélectrique et les lignes de transmission ne sont pas disposées dans le prolongement de la ligne principale 14a mais latéralement à celle-ci. Les lignes de transmission quart d'onde peuvent être ainsi disposés le long des bords du substrat diélectrique, en formant un angle droit, comme cela est représenté sur la figure 4.

Plutôt que de former les premier et second circuits d'ajustement d'impédance 14b, 14c sous la forme de lignes de transmission, on peut choisir de les former par l'intermédiaire de composants réactifs : capacité, inductance, et/ou résistance.

Quel que soit le mode de mise en œuvre choisi, l'antenne à plaque 11 est configurée pour que le signal se développant dans la ligne de transmission 14 soit stationnaires lorsqu'un signal électrique à la fréquence de fonctionnement y est injecté, et qui présente deux nœuds de tension séparés d'une distance d'une demie longueur d'onde.

En plaçant le dispositif RFID sous test 1' à proximité de l'antenne à plaque 11, centré entre ces deux nœuds de tension, on impose par couplage inductif un court-circuit dans les éléments filaires constituant l'antenne, ce qui permet d'isoler le dispositif sous test 1' des autres dispositifs qui lui sont adjacents.

Le dispositif de couplage 15 quant à lui peut prendre différentes formes. Selon un premier exemple de réalisation, le dispositif de couplage est formé d'une cavité résonnante similaire à celle décrite dans le document WO201344451.

Deux électrodes disposées dans un boîtier munies d'une ouverture sur sa face supérieure, permet de générer un champ électromagnétique émergeant au niveau de cette ouverture. Le substrat diélectrique 13 est disposé sur le boîtier pour en recouvrir l'ouverture. L'injection du signal dans la ligne de transmission 14 à partir du champ émergeant de l'ouverture du boîtier, peut être obtenu en ménageant une ouverture 14d dans la piste conductrice formant la ligne de transmission principale 14a et une seconde ouverture 14e sur le film conducteur en formant le plan de masses disposées sur la face opposée 13b du substrat 13. Ces ouvertures sont réalisées au droit de l'ouverture du boîtier lorsque le substrat est convenablement disposé sur ce boîtier. Une telle configuration est représentée sur la figure 5.

Ce mode de réalisation n'est pas limitatif, et on peut envisager d'employer d'autres techniques connues pour injecter un signal du testeur dans l'antenne à plaques. On peut ainsi envisager d'utiliser des lignes coplanaires formées sur le substrat pour amener le signal électrique à partir d'un connecteur d'un câble coaxial jusqu'à la ligne de transmission ; ou de réaliser un via traversant le substrat diélectrique pour relier directement le connecteur du câble coaxial à la ligne principale de transmission et au plan de masse si celui-ci est présent.

Bien entendu l'invention n'est pas limitée aux modes de mise en œuvre décrits et on peut y apporter des variantes de réalisation sans sortir du cadre de l'invention tel que défini par les revendications.

## Revendications

1. Équipement de test d'un dispositif RFID (1'), le dispositif RFID (1') étant configuré pour fonctionner à une longueur d'onde de fonctionnement, l'équipement de test comprenant un terminal d'émission réception (10), une antenne (11) muni d'un coupleur (15), et un câble de connexion (12) entre le terminal d'émission réception (10) et le coupleur (15), l'équipement de test étant **caractérisé en ce que** l'antenne est une antenne à plaque (11) qui comprend :
- un substrat diélectrique plan (13) ;
- une ligne de transmission résonante (14) disposée sur une première face du substrat (13), le coupleur (15) étant configuré pour relier la ligne de transmission résonnante au terminal (10) ; la ligne de transmission comprend :
- une ligne principale demi-onde (14a) présentant une première extrémité et une seconde extrémité ;
- un premier circuit d'ajustement d'impédance (14b) électriquement relié à la première extrémité de la ligne principale (14a) et configuré pour imposer un nœud de tension à la première extrémité lorsqu'un signal présentant la longueur d'onde de fonctionnement se propage dans la ligne de transmission (14) ;
- un second circuit d'ajustement d'impédance (14c) électriquement relié à la seconde extrémité de la ligne principale (14a) et configuré pour imposer un nœud de tension à la seconde extrémité lorsqu'un signal présentant la longueur d'onde de fonctionnement se propage dans la ligne de transmission (14).

2. Équipement de test selon la revendication précédente dans laquelle les premier et second circuits d'ajustement d'impédance (14b, 14c) comprennent chacun une ligne de transmission quart d'onde.

3. Équipement de test selon la revendication précédente dans laquelle la ligne de transmission résonante (14) est réalisée sous la forme d'une ligne micro ruban.

4. Équipement de test selon l'une des revendications précédentes dans laquelle la ligne principale (14a) s'étend d'un bord à l'autre du substrat diélectrique (13).

5. Équipement de test selon la revendication précédente dans laquelle le premier et le second circuit d'adaptation d'impédance (14b, 14c) sont disposés latéralement à la ligne principale (14a).

6. Équipement de test selon l'une des revendications précédentes dans laquelle le coupleur (15) comprend une cavité résonnante.

## Patentansprüche

1. Testeinrichtung einer RFID-Vorrichtung (1'), wobei die RFID-Vorrichtung (1') zum Betriebenwerden bei einer Betriebswellenlänge konfiguriert ist, die Testeinrichtung umfassend einen Sendeempfangsanschluss (10), eine Antenne (11), die mit einer Koppeleinheit (15) versehen ist, und ein Verbindungskabel (12) zwischen dem Sendeempfangsanschluss (10) und der Koppeleinheit (15),
wobei die Testeinrichtung **dadurch gekennzeichnet ist, dass** die Antenne eine Patch-Antenne (11) ist, die umfasst:
- ein planares dielektrisches Substrat (13);
- eine Resonanzübertragungsleitung (14), die auf einer ersten Seite des Substrats (13) angeordnet ist, wobei die Koppeleinheit (15) zum Verknüpfen der Resonanzübertragungsleitung mit dem Anschluss (10) konfiguriert ist;
wobei die Übertragungsleitung umfasst:
- eine Halbwellenhauptleitung (14a), die ein erstes Ende und ein zweites Ende aufweist;
- eine erste Impedanzanpassungsschaltung (14b), die mit dem ersten Ende der Hauptleitung (14a) elektrisch verknüpft und zum Anlegen eines Spannungsknotens an das erste Ende konfiguriert ist, wenn sich ein Signal, das die Betriebswellenlänge aufweist, in der Übertragungsleitung (14) ausbreitet;
- eine zweite Impedanzanpassungsschaltung (14c), die mit dem zweiten Ende der Hauptleitung (14a) elektrisch verknüpft und zum Anlegen eines Spannungsknotens an das zweite Ende konfiguriert ist, wenn sich ein Signal, das die Betriebswellenlänge aufweist, in der Übertragungsleitung (14) ausbreitet.

2. Testeinrichtung nach dem vorstehenden Anspruch, wobei die erste und die zweite Impedanzanpassungsschaltung (14b, 14c) jeweils eine Viertelwellenübertragungsleitung umfassen.

3. Testeinrichtung nach dem vorstehenden Anspruch, wobei die Resonanzübertragungsleitung (14) in Form einer Mikrostreifenleitung umgesetzt ist.

4. Testeinrichtung nach einem der vorstehenden Ansprüche, wobei sich die Hauptleitung (14a) von einem zu dem anderen Rand des dielektrischen Substrats (13) erstreckt.

5. Testeinrichtung nach dem vorstehenden Anspruch, wobei die erste und die zweite Impedanzanpassungsschaltung (14b, 14c) seitlich der Hauptleitung (14a) angeordnet sind.

6. Testeinrichtung nach einem der vorstehenden Ansprüche, wobei die Koppeleinheit (15) einen Resonanzhohlraum umfasst.

## Claims

1. Apparatus for testing an RFID device (1'), the RFID device (1') being configured to operate at an operating wavelength, the testing apparatus comprising a transmission-reception terminal (10), an antenna (11) provided with a coupler (15), and a connection cable (12) between the transmission-reception terminal (10) and the coupler (15),
the testing apparatus being **characterized in that** the antenna is a patch antenna (11) which comprises:
- a planar dielectric substrate (13);
- a resonant transmission line (14) arranged on a first face of the substrate (13), the coupler (15) being configured to connect the resonant transmission line to the terminal (10);
the transmission line comprises:
- a half-wave main line (14a) having a first end and a second end;
- a first impedance adjustment circuit (14b) electrically connected to the first end of the main line (14a) and configured to impose a voltage node on the first end when a signal having the operating wavelength propagates in the transmission line (14);
- a second impedance adjustment circuit (14c) electrically connected to the second end of the main line (14a) and configured to impose a voltage node on the second end when a signal having the operating wavelength propagates in the transmission line (14).

2. Testing apparatus according to the preceding claim, wherein the first and second impedance adjustment circuits (14b, 14c) each comprise a quarter-wave transmission line.

3. Testing apparatus according to the preceding claim, wherein the resonant transmission line (14) is made in the form of a microstrip line.

4. Testing apparatus according to any of the preceding claims, wherein the main line (14a) extends from one edge to the other of the dielectric substrate (13).

5. Testing apparatus according to the preceding claim, wherein the first and the second impedance matching circuit (14b, 14c) are arranged laterally with respect to the main line (14a).

6. Testing apparatus according to any of the preceding claims, wherein the coupler (15) comprises a resonant cavity.
